# EUROPEAN PATENT APPLICATION

(11) **EP 3 536 143 A1**
(43) Date of publication of application: **11.09.2019**
(21) Application number: 19161211.8
(22) Date of filing: 07.03.2019
(51) Int. Cl.: A01D 69/00, A01B 71/06, B60K 11/06

(54) **POWER SHAFT ASSEMBLY**

(30) Priority: 08.03.2018 US 201815915516
(71) Applicant: CNH Industrial Belgium NV, 8210 Zedelgem (BE)
(72) Inventor: BEST, JOSEPH R., Leola, PA 17540 (US); Farley, Mr. Herbert M., Elizabethtown, PA Pennsylvania 17022 (US); Garland, Dan, Solon, IA 52333 (US)
(74) Representative: CNH Industrial IP Department

(57) **Abstract**

A power shaft assembly (120) for a work vehicle (100) including a power shaft (121) defining a longitudinal axis (L1) and having an outer surface and a housing (122) surrounding the power shaft (121). The housing (122) includes an inner surface, a first end (122A) with a first opening (125A), and a second end (122B) with a second opening (125B). The housing (122) extends along the longitudinal axis (L1) of the power shaft (121) from the first end (122A) to the second end (122B). The housing (122) defines an inner space (126) in between the power shaft (121) and the inner surface of the housing (122). The power shaft assembly (120) also includes at least one axial fan (124) radially within the housing (122) and affixed to the outer surface of the power shaft (121). The at least one axial fan (124) is configured to draw a fluid from the second opening (125B) of the housing (122) and expel the fluid out through the first opening (125A) of the housing (122).

## Description

### FIELD OF THE INVENTION

The present invention pertains to agricultural vehicles and, more specifically, to agricultural vehicles that include a power shaft.

### BACKGROUND OF THE INVENTION

Work vehicles, including agricultural vehicles such as combines, windrowers, or tractors, typically include a power shaft for operably translating power from a prime mover, e.g. an engine, to a driven component. For example, combines can include a power shaft that is operably coupled to a header to drive one or more cutter bar(s) and conveyor(s) for the harvesting of crop material.

Gearboxes can be used to translate motion from the power shaft of the work vehicle to a driven component. Although gearboxes provide for an efficient translation of movement between the work vehicle and driven component, the gearboxes may become overheated under certain operating conditions. To regulate the temperature of gearboxes during operation of the driven component, it is known to include oil reserves and/or heat sinks integrated with the gearboxes. However, such cooling devices may not sufficiently cool the gearbox. Further, such cooling devices may increase the size and overall weight of the gearbox, which may increase manufacturing and operational costs.

What is needed in the art is a cost-effective apparatus and method to cool the gearbox(es) attached to a power shaft.

### SUMMARY OF THE INVENTION

In one exemplary embodiment provided in accordance with the present invention, a power shaft assembly includes a power shaft, a housing, and at least one fan to blow a cooling airstream onto a gearbox.

In another exemplary embodiment provided in accordance with the present invention, a power shaft assembly for a work vehicle includes a power shaft defining a longitudinal axis and having an outer surface and a housing surrounding the power shaft. The housing includes an inner surface, a first end with a first opening, and a second end with a second opening. The housing extends along the longitudinal axis of the power shaft from the first end to the second end. The housing defines an inner space in between the power shaft and the inner surface of the housing. The power shaft assembly also includes at least one axial fan radially within the housing and affixed to the outer surface of the power shaft. The at least one axial fan is configured to draw a fluid from the second opening of the housing and expel the fluid out through the first opening of the housing.

In yet another exemplary embodiment provided in accordance with the present invention, a work vehicle includes a prime mover, a driven component configured to be driven by the prime mover and having a gearbox, and a power shaft assembly. The power shaft assembly includes a power shaft operably coupled to the gearbox and defining a longitudinal axis and having an outer surface. The power shaft assembly also includes a housing surrounding the power shaft. The housing includes an inner surface, a first end with a first opening, and a second end with a second opening. The housing extends along the longitudinal axis of the power shaft from the first end to the second end. The housing defines an inner space in between the power shaft and the inner surface of the housing. The power shaft assembly also includes at least one axial fan radially within the housing and affixed to the outer surface of the power shaft. The at least one axial fan is configured to draw a fluid from the second opening of the housing and expel the fluid out through the first opening of the housing.

In yet another exemplary embodiment provided in accordance with the present invention, a method for cooling a gearbox is provided. The method includes the steps of providing a power shaft assembly. The power shaft assembly includes a power shaft defining a longitudinal axis and having an outer surface and being configured for operably coupling to the gearbox. The power shaft assembly also includes a housing surrounding the power shaft. The housing includes an inner surface, a first end with a first opening, and a second end with a second opening. The housing extends along the longitudinal axis of the power shaft from the first end to the second end. The housing defines an inner space in between the power shaft and the inner surface of the housing. The power shaft assembly also includes at least one axial fan radially within the housing and affixed to the outer surface of the power shaft. The method also includes the step of drawing air from a clean location located at a distance from the gearbox and into the second opening by the at least one fan. The method also includes the step of expelling the air, by the at least one axial fan, from the second opening through the first opening of the housing and onto the gearbox.

An advantage of the exemplary embodiment of the present invention is that the gearbox of a driven component may be sufficiently cooled during operation of the work vehicle.

Another advantage of the exemplary embodiment of the present invention is that the overall weight of the gearbox may be reduced because the gearbox is sufficiently cooled from a power shaft assembly instead of an increased oil reserve or heat sink.

Yet another advantage of the exemplary embodiment of the present invention is that the gearbox is sufficiently cooled by an airstream which minimizes the inclusion of chaff and/or dirt expulsion through the fan and onto the gearbox.

### BRIEF DESCRIPTION OF THE DRAWINGS

For the purpose of illustration, there are shown in the drawing certain embodiments of the present invention. It should be understood, however, that the invention is not limited to the precise arrangements, dimensions, and instruments shown. Like numerals indicate like elements throughout the drawing. In the drawing:

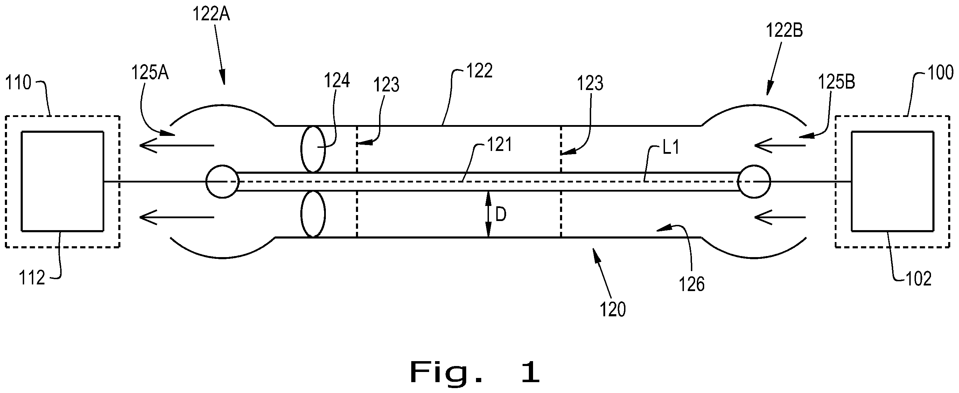

Fig. 1 illustrates a schematic view of an exemplary embodiment of a power shaft assembly, the power shaft assembly including a housing surrounding the power shaft and a cooling fan therein, in accordance with an exemplary embodiment of the present invention.

### DETAILED DESCRIPTION OF THE INVENTION

Referring now to Fig. 1, there is shown a schematic of a work vehicle 100, a driven component 110, and a power shaft assembly 120. The work vehicle 100 has a prime mover 102 that is operably coupled to a gearbox 112 of the driven component 110. The work vehicle 100 may be in the form of any desired work vehicle, for example, a combine, tractor, a windrower, etc. The driven component 110 may be in the form of any desired implement, component, or part which is operably driven by the prime mover 102 of the work vehicle 100. For example, the driven component 110 may be in the form of a header 110 that is coupled to a combine 100. Depending upon a particular type of header 110, the prime mover 102 may be operably coupled to one or more gearbox(es) 112 for driving the cutter bar(s), the conveyor(s), the reel, the stalk rollers, and/or the gathering chains.

The power shaft assembly 120 may include a power shaft 121 which defines a longitudinal axis L1, a housing 122, one or more spacer(s) 123, and one or more axial fan(s) 124. The power shaft assembly 120 is configured for cooling the gearbox 112 by providing air from a clean location onto the surface of the gearbox 112, as indicated by the arrows illustrating airflow in Fig. 1. It should be appreciated that more than one power shaft assembly 120 may be included to transfer motion from the work vehicle 100 to multiple gearboxes 112 of a driven component 110.

The power shaft 121 may be operably coupled to the gearbox 112 and to the prime mover 102. The power shaft 121 defines and rotates about the longitudinal axis L1. The power shaft 121 may be in the form of any desired shaft which translates motion from a work vehicle 100 to a gearbox 112. For example, the power shaft 121 may be in the form of a power take off (PTO) shaft from a work vehicle 100 or a line shaft from the driven component 110. It should also be appreciated that more than one power shaft 121 may be included in a power shaft assembly 120.

The housing 122 may surround the power shaft 121 and extend along the longitudinal axis L1 of the power shaft 121 from a first end 122A with an opening 125A to a second end 122B with another opening 125B. The housing 122 defines an inner space 126 between the power shaft 121 and an inner surface of the housing 122. The housing 122 may be composed of any desired material, such as a metal or a plastic material. For instance, the housing 122 may be in the form of a bellows 122. The bellows 122 allows air to pass through both openings 125A, 125B and the inner space 126.

The spacer(s) 123 may be located within the inner space 126 and positioned between the power shaft 121 and the inner surface of the housing 122. The spacer(s) 123 may be coupled to the power shaft 121 and the housing 122 at any desired location. The spacer(s) 123 may be fixed to and interconnected between the outer surface of the power shaft 121 and to the inner surface of the housing 122. In this way, the spacer(s) 123 may support the housing 122 and maintain the distance D of the inner space between the power shaft 121 and the inner surface of the housing 122. Thereby, the spacer(s) 123 and the housing 122 may rotate along with the power shaft 121. In the present exemplary embodiment, the power shaft assembly 120 is shown to include two spacers 123; however, there may be one or more than two spacer(s) 123 between the power shaft 121 and the housing 122. The spacer(s) 123 may be composed of any desired material, such as a metal or a plastic material. The spacer(s) 123 may be of any desired size in order to allow a desirable airflow through the housing 122. The spacer(s) 123 may be in the form of spokes which surround the power shaft 121 and/or a cylindrical screen that surrounds the power shaft 121. However, it should be appreciated that the power shaft assembly 120 may not include spacers 123.

The axial fan 124 may be coupled to the power shaft 121. The fan 124 draws a fluid, such as air, from the opening 125B of the housing 122, through the inner space 126, and then the fan 124 expels the fluid out through the opening 125A of the housing 122 in order to cool the gearbox 112. The fan 124 may be concentrically mounted with the power shaft 121 such that the fan 124 and power shaft 121 share the common axis L1 about which they rotate. In the present exemplary embodiment, the fan 124 is located radially within the inner space 126 of the housing 122 and affixed to the outer surface of the power shaft 121. Thereby, the fan 124 may be driven by the rotational movement of the power shaft 121. It is possible for the fan 124 to be driven by a separate motor (not shown). The fan 124 may be located proximate to the end 122A of the housing 122. Additionally, in the present exemplary embodiment, the fan 124 may be located before the spacer(s) 123, closest to the end 122A of the housing 122. However, the fan 124 may be located at any desired position along the length of the power shaft 121. It should be appreciated that the power shaft assembly 120 may include one or multiple fan(s) 124 along the length of the power shaft 121. For example, the power shaft assembly 120 may include two fans 124 located proximate to each end 122A, 122B of the housing 122. Further, the support structure of the fan(s) 124 may also support the housing 122. For example, if the power shaft assembly 120 does not include spacers 123, the framework of the fan(s) 124 may connect to and carry the weight of the housing 122.

During operation of the work vehicle 100, the fan(s) 124 may cool the gearbox 112. The fan 124 may first draw air from a clean location located at a distance from the gearbox 112 and into the opening 125B. The term clean location as used herein may refer to a location near the end of the power shaft 121 that is coupled to the work vehicle 100, opposite to the end of the power shaft 121 which is coupled to the gearbox 112. This clean location is generally further from the ground and may allow less dirt or debris to enter into the housing 122 and blow on the gearbox 112. In this regard, drawing air from the clean location may prevent damage or reduce the possibility of damage to the fan 124 which may be caused by debris. Once the fan 124 draws air into the opening 125B, the fan 124 draws air through the inner space 126, and the fan 124 expels air out of the opening 125A and onto the gearbox 112.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein, but is intended to include all changes and modifications that are within the scope and spirit of the invention.

## Claims

1. A power shaft assembly (120) for a work vehicle (100), comprising:
a power shaft (121) defining a longitudinal axis (L1) and having an outer surface;
**characterized by**:
a housing (122) surrounding the power shaft (121) and having an inner surface, a first end (122A) with a first opening (125A), and a second end (122B) with a second opening (125B), said housing (122) extending along the longitudinal axis (L1) of the power shaft (121) from said first end (122A) to said second end (122B), said housing (122) defining an inner space (126) in between the power shaft (121) and the inner surface of the housing (122); and
at least one axial fan (124) radially within the housing (122) and affixed to the outer surface of the power shaft (121), said at least one axial fan (124) being configured to draw a fluid from said second opening (125B) of the housing (122) and expel the fluid out through the first opening (125A) of the housing (122).

2. The power shaft assembly (120) of claim 1, further including a gearbox (112) operably coupled to the power shaft (121), and said at least one axial fan (124) is configured to cool said gearbox (112).

3. The power shaft assembly (120) of claim 1, wherein said at least one axial fan (124) is concentrically mounted with the power shaft (121).

4. The power shaft assembly (120) of any of the preceding claims, further including at least one spacer (123) located in said inner space (126) of the housing (122) and interconnected between the power shaft (121) and the housing (122).

5. The power shaft assembly (120) of claim 4, wherein said at least one spacer (123) is fixed to said power shaft (121) and to said inner surface of the housing (122) such that said at least one spacer (123) supports said housing (122) and maintains a distance (D) of said inner space (126) between the power shaft (121) and the inner surface of the housing (122).

6. The power shaft assembly (120) of claim 4, wherein said at least one spacer (123) includes two spacers (123).

7. The power shaft assembly (120) of any of the preceding claims, wherein said at least one axial fan (124) is located proximate to said first end (122A) of the housing (122).

8. The power shaft assembly (120) of any of the preceding claims, wherein said housing (122) is in the form of a bellows (122).

9. A work vehicle (100), comprising:
a prime mover (102);
a driven component (110) configured to be driven by said prime mover (102) and having a gearbox (112); and
**characterized by**:
a power shaft assembly (120) according to any one of claims 1 to 8.

10. A method for cooling a gearbox (112), including the steps of:
providing a work vehicle (100),
**characterized by**:
said work vehicle (100) including a power shaft assembly (120) according to any one of claims 1 to 8;
drawing air from a clean location located at a distance from said gearbox (112) and into said second opening (125B) by said at least one fan (124); and expelling said air, by said at least one axial fan (124), from the second opening (125B) through said first opening (125A) of the housing (122) and onto said gearbox (112).
